# EUROPEAN PATENT APPLICATION

(11) **EP 3 656 341 A1**
(43) Date of publication of application: **27.05.2020**
(21) Application number: 18208096.0
(22) Date of filing: 23.11.2018
(51) Int. Cl.: A61C 5/62, A61C 19/06

(54) **APPLICATION DEVICE AND METHOD FOR PRODUCING AN APPLICATION DEVICE**

(71) Applicant: Sulzer Mixpac AG, 9469 Haag (Rheintal) (CH)
(72) Inventor: TIEKENHEINRICH, Lars, 24147 Kiel (DE)
(74) Representative: Manitz Finsterwald Patent- und Rechtsanwaltspartnerschaft mbB

(57) **Abstract**

The invention relates to an application device (10), in particular for dental compounds, comprising a housing (20) and an application tool (70). Further, the invention relates to a method for producing an application device (10).

## Description

The present invention relates to an application device, in particular for dental compounds, comprising a housing and an application tool. Further, the present invention relates to a method for producing an application device.

Application devices for the application of fluids are commonly used. Such application devices can be used with liquid fluids and gaseous fluids. Application devices often are connected to discharging devices, providing different ways of application, for instance in terms of application area and/or distribution. Especially for an application of dental compounds it is known to use such application devices.

Especially in a medical environment, for instance for the aforementioned application of dental compounds, application devices are changed often, especially after each single usage or at least before the treatment of the next patient. This results in a high consumption of application devices.

In view of the above, it is an object of the present invention to provide an improved application device and an improved method for producing such an application device. In particular, it is an object of the invention to provide an application device and a method for producing such an application device which allows an especially easy, fast and cheap way to produce application devices in huge numbers.

This objective is solved by the patent claims. In particular, this objective is solved by an application device according to claim 1 and by a method for producing an application device according to claim 11. The dependent claims describe preferred embodiments of the invention.

According to a first aspect of the invention the objective is solved by an application device, in particular for dental compounds, comprising a housing and an application tool, the housing comprising an application channel extending through the housing and having an application channel inlet port and an application outlet, the application channel outlet being in fluid connection with the application tool; the application device further comprising a connection section being distinct from the housing, the connection section comprising a connection channel having a connection channel inlet port and a connection channel outlet port; further the connection section comprising connection means arranged at the connection channel inlet port, the connecting means being configured to be connected to an outlet port of a discharging device, in particular by inserting the connecting means into the outlet port of the discharging device; the connection channel outlet port being configured to be sealingly connected to the application channel inlet port to build a discharging channel extending from the connection channel inlet port to the application channel outlet; the housing further comprising a shielding section, the shielding section is standing apart from the connection section and surrounding the connection section when the connection channel outlet port is connected to the application channel inlet port; further the shielding section extending beyond the connection channel inlet port in the direction of the connection section; and wherein the connection channel and the application channel run obliquely to each other, when the connection channel outlet port is connected to the application channel inlet port.

An application device according to the invention can be used for an application of fluids, for instance liquids or gases. Especially and in particular an application device according to the invention can be used to applicate dental compounds, for instance on the tooth of a patient. As such application devices often are changed after a single usage or at least as preparation for the next patient, a large number of such application devices are needed. This can easily be provided with an application device according to the invention, as the production of such an application device according to the invention is simplified and especially the production cost is lowered.

According to the invention an application device essentially comprises two parts, a housing including an application tool and distinct from this component a connection section. The housing comprises an application channel, which extends through the housing. For providing this feature, the application channel has on its first end an application channel inlet port and on its second end an application channel outlet port. Therefore, fluid can be transported through the housing via this application channel. Further on, the application channel outlet is in fluid connection with the application tool, wherein the application tool is used to applicate the fluid onto the target surface.

The connection section on the other hand is distinct from the housing. It comprises a connection channel which extends through the connection section. The connection channel comprises a connection channel inlet port on its first end and the connection channel outlet port on its second end. Especially, the connection channel outlet port is constructed such that it can be sealingly connected to the application channel inlet port. By doing so a discharging channel is build out of the connection channel of the connection section and the application channel of the housing. The discharging channel extends therefore essentially between the connection channel inlet port to the application channel outlet.

It is an essential part of the invention that the connection channel and the application channel run obliquely to each other when the connection channel outlet port is connected to the application channel inlet port. Obliquely in the scope of the present invention especially means an angle between the connection channel and the application channel of 5° to 85°, essentially of 20° to 55°, preferably of 30°. In other words, the connection channel and the application channel are arranged in a kinked configuration. Therefore, target areas not reachable for application devices with a completely straight channel can be reached. Especially for dental compounds this means that all areas within the mouth of a patent can be reached easily.

Additionally, the connection section comprising connecting means arranged at the connection channel inlet port to connect the application device to an outlet port of a discharging device. In particular, this can be provided by inserting the connection means into the outlet port of the discharging device. A connection between the application device and the discharging device, wherein the discharging device provides the fluid to be applicated, can therefore be provided in an easy way.

Further on, the housing comprises a shielding section. This shielding section stands apart from the connection section and surrounds the connection section when the channel outlet port is connected to the application channel inlet port. In other words, the shielding section forms an inner volume of the housing. The shielding section is an element of an application device according to the invention distinct of the connection section and especially never physically touching the connection section although surrounding it. Therefore the connection section is shielded by the shielding section from direct contact, especially manual direct contact. To improve these shielding further, the shielding section extends beyond the connection channel inlet port in the direction of the connection section. In the scope of the invention the direction of the connection section can be preferably also the direction of the connection channel and is a general direction, which extends linear along the connection section and/or the connection channel. Especially, if the application device according to the invention is for instance placed on a surface, only the shielding section of the housing is touching this surface. The connection channel inlet port and the connection section as a whole are recessed and therefore protected. A manual contact especially of the discharging channel and the risk of a contamination can therefore be lowered.

Further on, the application device according to the invention can be characterized in that the connection channel and/or the application channel are linearly extending channels. Linear extending channels can be produced especially easily, in particular if an injection molding process is used to produce the housing sections. The production of an application device according to the invention can therefore be provided faster and at lower cost. Nevertheless, as the connection channel and the application channel run obliquely to each other, all advantages described above in respect of the kinked configuration of the resulting discharging channel can still be provided.

In addition, an application device according to the invention can be characterized in that the housing and/or the application tool and/or the connection section are made of plastic. Plastic is an especially light-weight material and additionally easy in its handling. For different fluids to be applicated, different sorts of plastic are suitable and available and therefore a range of fluids to be applicated with an application device according to the invention can be extended. Also the production of an application device wherein the material used to produce the housing and/or the application tool and/or the connection section is plastic can be provided more easily, especially if an injection molding process is used to produce the housing sections and/or the application tool and/or the connection section.

Further on, an application device according to the invention can be characterized in that the material of the application tool is softer than the material of the housing and/or the material of the connection section. The application tool is used to applicate the fluid of the target surface. This procedure often includes a direct physical contact of the application tool and the target surface. By using a soft material for the application tool, especially a material softer as the material used for housing and/or the material used for the connection section, a certain flexibility of the application tool, especially of the application tip, can be provided and therefore harming of the target surface can be prohibited.

In this connection it should be noted that a soft material, especially a plastic material, may be a material having a hardness measured with the Shore A Durometer selected in the range of 20A to 95A and up to a hardness measured with the Shore D Durometer of 55D. Typical examples of soft materials, especially plastic materials, are TPEs (thermoplastic elastomers or thermoplastic rubbers). TPEs typically have a hardness measured on the "A" scale from 20 Shore "A" to 95 Shore "A", with some harder TPE materials, i.e. materials harder than 90 Shore "A" typically being measured on the "D" scale up to a hardness of 55D.

Preferably, an application device according to the invention can be characterized in that the housing and the application tool are produced in a 2-component injection molding process. In a 2-component injection molding process, two, preferably different, materials are used during the molding, either simultaneously or consecutively. As a result, a single component can be produced, wherein different sections of this component can be made up of different materials. For an example, an application tool made up of a soft material can be combined with a housing made up of a rigid material. Additionally, a secure fixing of the application tool on the housing, for instance due to grooves and/or undercuts in the housing filled with material of the application tool during an injection molding process of the application tool onto the housing, can easily be provided. Further on, 2-component molding is a fast, easy and cost efficient production method.

Further on, an application device according to the invention can be characterized in that the housing has a front end comprising the application channel outlet and that the application tool is provided in the region of the front end of the housing. Preferably, the front end of the housing is the section of the housing, where the application channel outlet is located. By providing the application tool at this front end of the housing, the fluid connection between the application channel outlet and the application tool, especially the application channel within the application tool, can be provided easily.

In an improvement of the embodiment, an application device according to the invention can be characterized in that the application tool comprises a rear shaft which encloses the region of the front end of the housing. Enclosing in the scope of the present invention includes that the rear shaft both completely and/or partly clasps around the region of the front end of the housing. An especially secure fixing of the application tool onto the housing, especially the front end of the housing, can therefore be provided.

Preferably, an application device according to the invention can be characterized in that the material of the housing and of the connection section is identical. By using an identical material for both of the housing and the connection section, the main parts of an application tool build up throughout by the same material can be provided. An especially rigid material can preferably be used to build up the housing and the connection section. Furthermore, the connection between the housing and the connection section can be provided easily as the two parts are made up of the same material, for instance when glued and/or welded together.

Additionally, the application device according to the invention can be characterized in that the application tool has an application tip provided at the front end of the application tool. By providing such an application tip, the application itself can be improved. The application tip can provide for instance a sponge- or brush-like structure and/or distribution channels. Especially, such an application tip can be adapted to the fluid to be applicated and/or to the target surface.

Further on, the application device according to the invention can be characterized in that the connecting means comprises a sealing surface for engaging a correspondent sealing area of the discharging device for providing a sealing. Such a sealing is provided by a sealing surface of the connecting means together with the correspondent sealing area of the discharging device provides two main advantages. First of all, the fluid to be applicated cannot leak out of the connection area between the connection channel inlet port and the outlet port of the discharging device. Secondly, also no other fluid can enter into the fluid to be applicated and therefore a contamination of the fluid to be applicated can be prohibited or at least lowered.

According to a second aspect of the invention the objective can be solved by a method for producing an application device according to the first aspect of the invention. A method according to the invention is characterized by the following steps:
producing the housing and the application tool in a 2-component injection molding process, in particular by first molding the housing and subsequently molding the application tool on the housing;
producing the connection section independently from the housing in a further injection molding process;
connecting the connection section to the housing, for example by welding or gluing, thereby sealingly connecting the connection channel outlet port to the application channel inlet port to build the discharging channel.

By using a method for producing an application device according to the second aspect of the invention, an application device according to the first aspect of the invention is produced. Therefore, all advantages described in detail with respect to an application device according to the first aspect of the invention can be provided. In the first step of the method according to the invention the housing and the application tool are produced in a 2-component injection molding process. Injection molding, especially 2-component injection molding, is an especially fast and low-cost manufacturing method and therefore the production of an application device according to the invention in huge numbers can be provided more easily. Preferably, two different materials can be used for the housing and the application tool, for instance a more rigid material for the housing and a softer material for the application tool. Preferably, as a first sub-step the housing can be molded and in a consecutive second sub-step the application tool can be molded onto the housing, for instance onto a front end of the housing. Hence, a particular secure fixing of the application tool onto the housing can be provided easily.

In the second step of the method according to the invention, the connection section is produced independently from the housing, especially in a further injection molding process. The advantaged described above in respect to the injection molding process can therefore also be provided in the production of the connection section. Preferably, for the production of the connection section and the housing the same material is used, leading to lower production costs due to a reduction in supply inventory.

In the final third step of a method according to the invention, the connection section is connected to the housing. This can be provided for instance by welding and/or gluing. An especially easy and secure fixing can be provided by using the same material to produce the housing and the connection section in the first and second step of the method according to the invention, respectively. Connecting the connection section to the housing also provides a sealingly connection of the connection channel outlet port of the connection section to the application channel inlet port of the housing to build the discharging channel. In other words, after this final step of the method according to the invention there is a continuous channel, namely the discharging channel, starting at the connection channel inlet port and extending to the application channel outlet, being in fluid connection with the application tool. By sealing the connection between the housing and the connection section, a leaking of the fluid to be applicated and also a contamination of this liquid can be prohibited.

The present invention is further described hereinafter with reference to illustrated embodiments shown in the accompanying drawings. Elements of the same function are specified throughout the figures with the same reference signs. In the following, any statement made having regard to the direction of a component are made relative to the position shown in the drawing and can naturally vary in the actual position of application. The description of the accompanying drawings is only by the way of detail. Specific features of each aspect of the present invention and after figures can be combined with each other if of technical sense. The Figures schematically show:
- Fig. 1: a sectional view of a housing and an application tool,
- Fig. 2: a detail view of Fig. 1,
- Fig. 3: a sectional view of a connection section,
- Fig. 4: a first sectional view of an application device in an unassembled state,
- Fig. 5: a second sectional view of an application device in an assembled state,
- Fig. 6: an isometric view of an application device, and

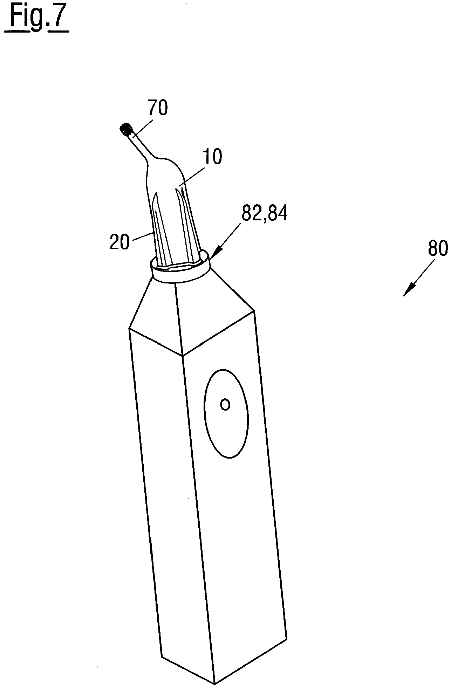

- Fig. 7: a discharging device.

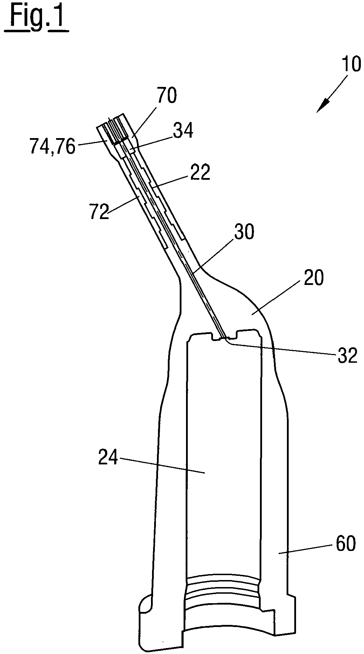

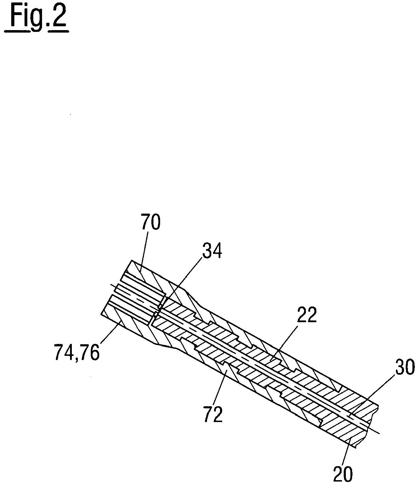

Fig. 1 and 2 show sectional views of a housing 20 and an application tool 70, wherein Fig. 2 shows a detailed view of a front end 22 of the housing 20, on which the application tool 70 is arranged. In the following, these two Figures are therefore described together, wherein each Figure is addressed separately if necessary.

In Fig. 1 a sectional view of a housing 20 of an application device 10 according to the invention is shown. Additionally, already an application tool 70 is arranged on the front end 22 of the housing 10, preferably in a 2-component injection molding process. Especially preferred, the used material, both for the housing 20 and for the application tool 70, is plastic. The 2-component injection molding process allows providing the housing 20 and the application tool 70 as a single component, whereby the two sub-components can be made up from different materials. Preferably, the material used for the application tool 70 can be softer and the material for the housing 20 can be more rigid, resulting in a solid housing 20 and an application tool 70, especially in an application tip 76 of the application tool 70, which is at least somewhat flexible and prevents the target surface to be harmed. As clearly visible, a rear shaft 72 of the application tool 76 encloses the front end 22 region of the housing 20, providing a secure fixing of the application tool 70 on the housing 20.

This part of the application device 10 is shown in Fig. 2 in a detailed view. The application tool 70, especially comprising a rear shaft 22 on its rear end and the application tip 76 on its front end 74, encloses the front end 22 of the housing. An application channel 30 runs through the front end 22 of the housing 20, wherein the application tip 76 is placed at the application channel outlet 34. Grooves in the front end 22 of the housing 20 are filled with material of the application tool 70, therefore providing a secure fixing of the application tool 70. This arrangement can be easily and preferably be provided by using a 2-component injection molding process when producing the housing 20 and the application tool 70, wherein preferably as a first step the housing 20 is molded and subsequently as a second step the application tool 70 is molded onto the housing.

As mentioned above, part of the housing 20 as shown in Fig. 1 is an application channel 30, extending through the housing 20 from an application channel input port 32 to an application channel outlet 34. Preferably, the application channel 30 is a linear extending channel. As clearly visible, the application channel inlet port 32 ends well within the housing. Especially, a shielding section 60 extends well beyond the application channel inlet port 32, defining an inner volume 24 of the housing.

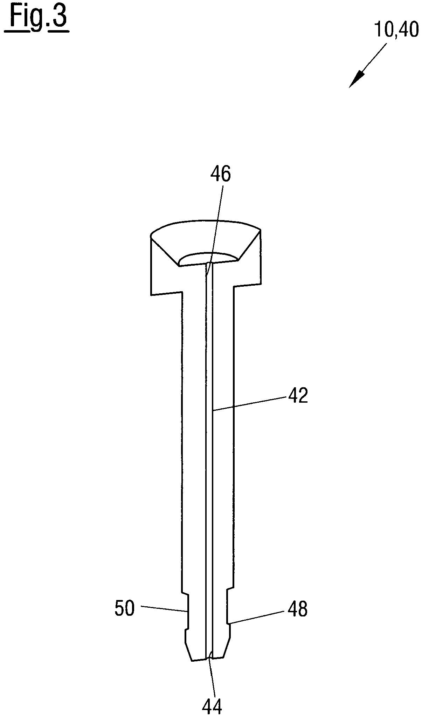

Fig. 3 shows a connection section 40 of an application device 10 according to the invention, which is used to extend the application channel 30 in the inner volume 24 of the housing 20 shown in Fig. 1. The connection section 40 comprises a connection channel 42 extending through the connection section 40 as preferably linear channel from a connection channel inlet port 44 to a connection channel outlet port 46. The connection channel outlet port 46 can be sealingly connected to the application channel inlet port 32, building a discharging channel 12 (not shown) in the application device 10 according to the invention. Similar to the housing 20 and the application tool 70 (not shown), the connection section 40 is made using an injection molding process, wherein a usage of the same material as used for the housing 20 is especially preferred. At the connection channel inlet port 44, the connection section 40 comprises connecting means 48 for a connection to an outlet port 82 of a discharging device 80 (not shown). An additional sealing surface 50 of the connection means 48 is used to engage a respective sealing area 84 of the discharging device 80 (both not shown), providing a sealed connection of the connection section 40 and therefore of the application device 10 as a whole, to the discharging device 80. Leaking of fluid to be applicated and/or a contamination of the fluid to be applicated can therefore be prohibited.

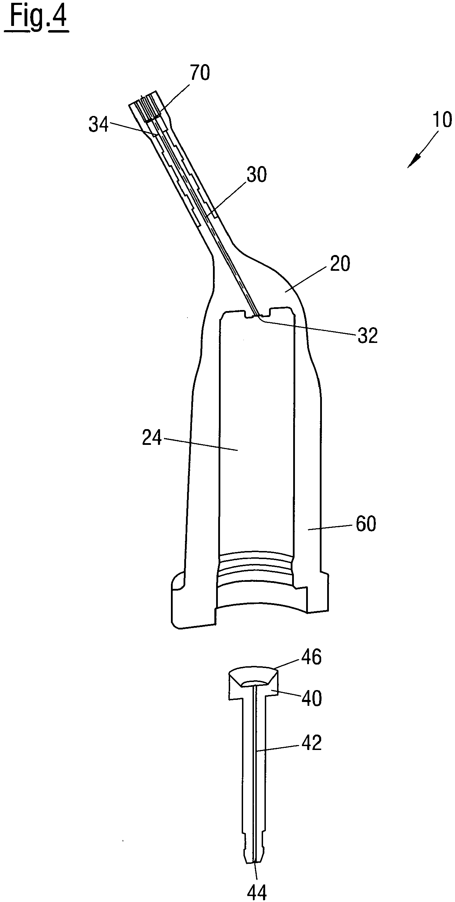

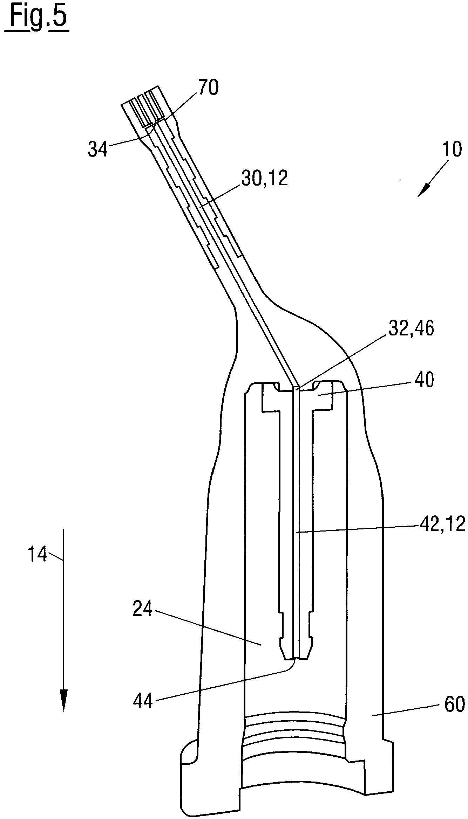

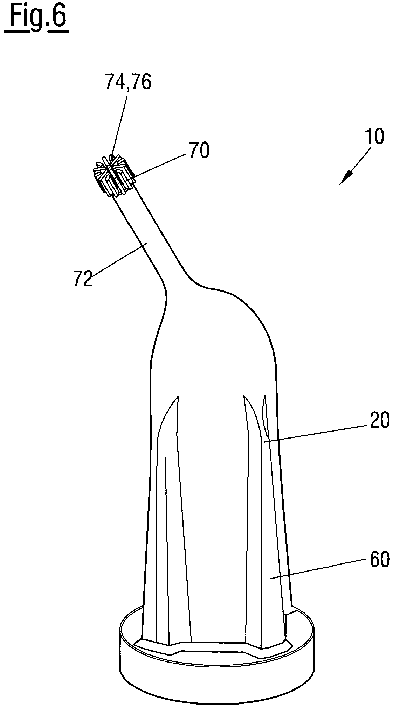

In the Figs. 4 to 6 an application device 10 according to the invention is shown in different steps of assembling. Fig. 4 and 5 show sectional views, Fig. 6 an isometric view of the fully assembled application device 10 according to the invention. In the following, these three Figures are therefore described together, wherein each Figure is addressed separately if necessary.

Fig. 4 and 5 show the components of an application device 10 according to the invention as described in Fig. 1 to 4. For detailed description of these components please see above. In Fig. 4, the connection section 40 is still placed outside of the inner volume 24 of the housing 20. The connection channel 42 of the connection section 40 and the application channel 30 of the housing 20 are separated.

In the next Fig. 5, the connection section 40 is positioned within the inner volume 24 of the housing 20, wherein the connection channel outlet port 46 is sealingly arranged at the application channel inlet port 32. Arranging the connection channel outlet port 46 on the application channel inlet port 32 can be preferably done by welding or gluing This forms a discharging channel 12 in the application device 10 according to the invention, extending from the connection channel inlet port 44 to the application channel outlet 34 in the application tip 74 of the application tool 70.

Further, the connection channel 42 and the application channel 30 run obliquely to each other when the connection channel outlet port 46 is connected to the application channel inlet port 32. In other words, the connection channel 42 and the application channel 30 are arranged in a kinked configuration. Therefore, target areas not reachable for application devices 10 with a completely straight channel can be reached. Especially for dental compounds this means that all areas within the mouth of a patent can be reached easily

In Fig. 5 it is clearly visible that shielding section 60 stand apart from the connection section 40 and surrounds the connection section 40. In other words, the connection section 40 is shielded by the shielding section 60 from direct contact, especially manual direct contact. Additionally, the shielding section 60 extends beyond the connection channel inlet port 44 in the direction 14 of the connection section 20 and the connection channel 42, respectively. This provides a connection channel inlet port 44 and the connection section 40 as a whole to be recessed and therefore protected within the inner volume 24. A manual contact especially of the discharging channel 12 and the risk of a contamination can therefore be lowered.

Fig. 6 shows the assembled application device 10 according to the invention as shown in Fig. 5 in an isometric view. The connection section 40 is not visible and protected within the housing 20 by the shielding section 60 of the housing 20. It is therefore possible to manually touch the application device 10, especially the housing 20, without the risk of contamination of the fluid to be applicated through the application tip 74 of the application tool 70.

In Fig. 6 a discharging device 80 in combination with an application device 10 according to the invention is shown. At an outlet port 82, often providing a sealing area 84, the application device 10 is securely fixed, especially using the connection means 48 on connection channel inlet port 44, concealed by the shielding section 60 of the housing 20. At the end of the application device 10 the application tool 70 is used to applicate the fluid to be applicated, wherein the discharging device 80 provides this fluid.

### List of references

- 10: application device
- 12: discharging channel
- 14: direction

- 20: housing
- 22: front end of the housing
- 24: inner volume

- 30: application channel
- 32: application channel inlet port
- 34: application channel outlet

- 40: connection section
- 42: connection channel
- 44: connection channel inlet port
- 46: connection channel outlet port
- 48: connecting means
- 50: sealing surface

- 60: shielding section

- 70: application tool
- 72: rear shaft
- 74: front end of the application tool
- 76: application tip

- 80: discharging device
- 82: outlet port
- 84: sealing area

## Claims

1. An application device (10), in particular for dental compounds, comprising a housing (20) and an application tool (70);
the housing (20) comprising an application channel (30) extending through the housing (20) and having an application channel inlet port (32) and an application channel outlet (34), the application channel outlet (34) being in fluid connection with the application tool (70);
the application device (10) further comprising a connection section (40) being distinct from the housing (20), the connection section (40) comprising a connection channel (42) having a connection channel inlet port (44) and a connection channel outlet port (46);
further the connection section (40) comprising connecting means (48) arranged at the connection channel inlet port (44), the connecting means (48) being configured to be connected to an outlet port (82) of a discharging device (80), in particular by inserting the connecting means (48) into the outlet port (82) of the discharging device (80);
the connection channel outlet port (46) being configured to be sealingly connected to the application channel inlet port (32) to build a discharging channel (12) extending from the connection channel inlet port (44) to the application channel outlet (34);
the housing (20) further comprising a shielding section (60), the shielding section (60) standing apart from the connection section (40) and surrounding the connection section (40) when the connection channel outlet port (46) is connected to the application channel inlet port (32), further the shielding section (60) extending beyond the connection channel inlet port (44) in the direction of the connection section (40); and
wherein the connection channel (42) and the application channel (30) run obliquely to each other when the connection channel outlet port (46) is connected to the application channel inlet port (32).

2. The application device (10) of claim 1, wherein the connection channel (42) and/or the application channel (30) are linearly extending channels.

3. The application device (10) of claim 1 or 2, wherein the housing (20) and/or the application tool (70) and/or the connection section (40) are made of plastic.

4. The application device (10) of any of the preceding claims, wherein the material of the application tool (70) is softer than the material of the housing (20) and/or the material of the connection section (40).

5. The application device (10) of any of the preceding claims, wherein the housing (20) and the application tool (70) are produced in a 2-component injection molding process.

6. The application device (10) of any of the preceding claims, wherein the housing (20) has a front end (22) comprising the application channel outlet (34) and that the application tool (70) is provided in the region of the front end (22) of the housing (20).

7. The application device (10) of claim 6, wherein the application tool (70) comprises a rear shaft (72) which encloses the region of the front end (22) of the housing (20).

8. The application device (10) of any of the preceding claims, wherein the material of the housing (20) and of the connection section (40) is identical.

9. The application device (10) of any of the preceding claims, wherein the application tool (70) has an application tip (76) provided at the front end (74) of the application tool (70).

10. The application device (10) of any of the preceding claims, wherein the connecting means (48) comprises a sealing surface (50) for engaging a correspondent sealing area (84) of the discharging device (80) for providing a sealing.

11. A method for producing an application device (10) according to any of the preceding claims,
**characterized by** the steps of
producing the housing (20) and the application tool (70) in a 2-component injection molding process, in particular by first molding the housing (20) and subsequently molding the application tool (70) on the housing (20); producing the connection section (40) independently from the housing (20) in a further injection molding process;
connecting the connection section (40) to the housing (20), for example by welding or gluing, thereby sealingly connecting the connection channel outlet port (46) to the application channel inlet port (32) to build the discharging channel (12).
